# EUROPEAN PATENT APPLICATION

(11) **EP 4 538 438 A1**
(43) Date of publication of application: **16.04.2025**
(21) Application number: 23868390.8
(22) Date of filing: 07.08.2023
(51) Int. Cl.: D03D 11/00, D03D 15/283, D03D 15/208, D03D 15/275, D03D 1/02, B60R 21/235

(54) **TWO-LAYER FABRIC**

(30) Priority: 21.09.2022 KR 20220119559
(71) Applicant: Kolon Industries, Inc., Seoul 07793 (KR)
(72) Inventor: KIM, Hyo Eun, Seoul 07793 (KR); CHUNG, Il, Seoul 07793 (KR); LEE, Young Soo, Seoul 07793 (KR); KIM, Ki Jeong, Seoul 07793 (KR); HEO, Jin Wook, Seoul 07793 (KR); PARK, Ji Hoon, Seoul 07793 (KR)
(74) Representative: Ter Meer Steinmeister & Partner
(86) International application number: PCT/KR2023/011616
(87) International publication number: WO 2024/063331

(57) **Abstract**

The present disclosure relates to a two-layer fabric. According to the present application, there is provided a two-layer fabric in which the stress applied to the tether formed inside an airbag fabric during the inflation of the airbag can be relaxed by breaking low-strength yarns in the airbag fabric instead of the tether yarn, thereby preventing the tether yarn from breaking and controlling the deployment shape of the airbag.

## Description

### [TECHNICAL FIELD]

The present application relates to two-layer fabrics. Specifically, the present disclosure relates to two-layer fabrics that can be used as an airbag.

### [BACKGROUND OF ART]

Airbags are installed to protect users in the event of an accident while the vehicle is in motion. For example, a curtain-type airbag may be installed at a location such as the side frame of a car. Since curtain-type airbags should have excellent internal pressure retention in preparation for vehicle rollover situations, they can be woven with jacquard without sewing. In general, the airbag fabric manufactured as above is called OPW (One-piece woven).

Since OPW uses a weaving method in which pockets are formed directly at the weaving step without sewing, there was a problem in controlling inflation. Excessive inflation may cause brain injury to the user. Accordingly, in order to appropriately control an inflation speed of a cushion and a volume of inflated cushion, a tether was formed inside the airbag fabric in the prior art. However, when the airbag was inflated, there was a problem in that stress was applied to the tether part, causing the yarn forming the tether to easily break, and the effect of applying the tether was not fully obtained.

### [DETAILED DESCRIPTION OF THE INVENTION]

### [Technical Problem]

One object of the present application is to provide a two-layer fabric that solves the problems of the prior art described above.

Another object of the present application is to provide an airbag that protects users from brain injury.

The above and other objects of the present application can all be solved by the invention of the present application described in detail below.

### [Technical Solution]

According to one embodiment of the present disclosure, there is provided a two-layer fabric including a first fabric layer woven by intersecting first yarns extending in a first direction with second yarns extending in a second direction; a second fabric layer woven by intersecting third yarns extending in a first direction with fourth yarns extending in a second direction; and tether yarns woven with the first yarns and the third yarns to connect the first fabric layer and the second fabric layer, wherein at least some of the first yarns and the third yarns include low-strength yarns and high-strength yarns alternately arranged in a second direction, and in the area where the tether yarn, which has intersected with the first yarn, intersects the third yarn, the tether yarn is woven only over the low-strength yarn among the first yarns and the low-strength yarn among the third yarns.

The tether yarn is woven with the first yarns of the first fabric layer and the third yarns of the second fabric layer, and in the area where the tether yarn, which has intersected with the first yarn, intersects the third yarn, the tether yarn is woven only over the low-strength yarn among the first yarns and the low-strength yarn among the third yarns. Thus, the low-strength yarn may rupture by the force applied to the tether yarn when the two-layer fabric inflates.

There may be one or two or more tether yarns. In one embodiment, when there are two or more tether yarns, the two or more tether yarns may intersect each other between the first and second fabric layers to form an X shape when viewed from a cross section of the two-layer fabric.

In one embodiment, the first yarns are composed of low-strength yarns and high-strength yarns alternately arranged in a second direction, and may intersect with the second yarns after forming a pair of one low-strength yarn and one high-strength yarn.

In one embodiment, the third yarns are composed of low-strength yarns and high-strength yarns alternately arranged in a second direction, and may intersect with the fourth yarns after forming a pair of one low-strength yarn and one high-strength yarn.

In one embodiment, the first yarns are composed of low-strength yarns and high-strength yarns alternately arranged in a second direction, and some of the first yarns may intersect with the tether yarn after forming a pair of one low-strength yarn and one high-strength yarn.

In one embodiment, third yarns are composed of low-strength yarns and high-strength yarns alternately arranged in a second direction, and some of the third yarns may intersect with the tether yarn after forming a pair of one low-strength yarn and one high-strength yarn.

In one specific embodiment, the first yarns and the third yarns are composed of low-strength yarns and high-strength yarns alternately arranged in a second direction, and the first yarns and the third yarns may intersect with the second yarns and the fourth yarns, respectively, after forming a pair of one low-strength yarn and one high-strength yarn. Some of the first yarns intersect with the tether yarn after forming a pair of one low-strength yarn and one high-strength yarn, and some of the third yarns may intersect with the tether yarn after forming a pair of one low-strength yarn and one high-strength yarn. In the area where the tether yarn, which has intersected with the first yarn, intersects the third yarn, the tether yarn may be woven only over the low-strength yarn among the first yarns and the low-strength yarn among the third yarns.

In one embodiment in which the first yarns and the third yarns are composed of low-strength yarns and high-strength yarns alternately arranged in a second direction, when the number of high-strength yarns is n, the number of low-strength yarns may be n+1.

In another embodiment, the first yarns include low-strength yarns and high-strength yarns alternately arranged in a second direction in some area, and may include high-strength yarns in the remaining area. The first yarns intersect with the second yarns after forming a pair of one low-strength yarn and one high-strength yarn in some area, and the high-strength yarns may intersect with the second yarns in the remaining area.

In another embodiment, the third yarns include low-strength yarns and high-strength yarns alternately arranged in a second direction in some area, and may include high-strength yarns in the remaining area. The third yarns intersect with the fourth yarns after forming a pair of one low-strength yarn and one high-strength yarn in some area, and the high-strength yarns may intersect with the fourth yarns in the remaining area.

In another embodiment, the first yarns include low-strength yarns and high-strength yarns alternately arranged in a second direction in some area, and may include high-strength yarns in the remaining area. The first yarns, which are high-strength yarns, may intersect with the tether yarn in the remaining area.

In another embodiment, the third yarns include low-strength yarns and high-strength yarns alternately arranged in a second direction in some area, and may include high-strength yarns in the remaining area. The third yarns, which are high-strength yarns, may intersect with the tether yarn in the remaining area.

In another specific embodiment, the first yarns and the third yarns include low-strength yarns and high-strength yarns alternately arranged in a second direction in some area, and may include high-strength yarns in the remaining area. The first yarns and the third yarns intersect with the second yarns and the fourth yarns, respectively, after forming a pair of one low-strength yarn and one high-strength yarn in some area, and the first yarns and the third yarns, which are high-strength yarns, may intersect with the second yarns and the fourth yarns, respectively, in the remaining area. The first yarns, which are high-strength yarns, intersect with the tether yarn, and the third yarns, which are high-strength yarns, may intersect with the tether yarn in the remaining area. In the area where the tether yarn, which has intersected with the first yarn, intersects the third yarn, the tether yarn may be woven only over the low-strength yarn among the first yarns and the low-strength yarn among the third yarns.

The first to fourth yarns and the tether yarn each may independently include one or more fibers selected from polyester fibers, polyamide fibers, polyaramid fibers, polyketone fibers, carbon fibers, and cellulose fibers, but the present disclosure is not limited thereto.

The low-strength yarns, for example, may have a smaller fineness or lower tenacity (N) than that of the high-strength yarns.

The high-strength yarns, the second yarns and the fourth yarns, for example, may include the same fibers.

### [ADVANTAGEOUS EFFECTS]

According to the present application, there is provided a two-layer fabric in which the stress applied to the tether formed inside an airbag fabric during the inflation of the airbag can be relaxed by breaking low-strength yarns in the airbag fabric instead of the tether yarn, thereby preventing the tether yarn from breaking and controlling the deployment shape of the airbag. Accordingly, it is possible to provide an airbag that protects against brain injury by using the two-layer fabric.

### [BRIEF DESCRIPTION OF THE DRAWINGS]

FIG. 1 schematically shows a cross section of a two-layer fabric to which a tether is applied according to the prior art.
FIG. 2 is to explain the problem that tether yarns (T) constituting the tether are easily broken when stress is applied to the tether in the inflation of the two-layer fabric of FIG. 1.
FIG. 3 schematically shows a cross section of a two-layer fabric including a first fabric layer (L1) in which first yarns (Y1) composed of alternating low-strength yarns (Y1a) and high-strength yarns (Y1b) are woven with second yarns (Y2), and a second fabric layer (L2) in which third yarns (Y3) composed of alternating low-strength yarns (Y3a) and high-strength yarns (Y3b) are woven with fourth yarns (Y4) according to one embodiment.
FIG. 4 is to explain the phenomenon in which the stress applied to the tether is distributed to low-strength yarns (Y1a, Y3a) when the two-layer fabric of FIG. 3 is inflated.
FIG. 5 shows that even if stress is applied to low-strength yarns (Y1a, Y3a) and the low-strength yarns (Y1a, Y3a) are broken as shown in FIG. 4, the tether yarn (T) is not broken and can still connect the first and second fabric layers (L1, L2) while being fastened to the first yarns (Y1) and the third yarns (Y3).
FIG. 6 schematically shows a cross-section of a two-layer fabric according to another embodiment including a first fabric layer (L1) in which there are alternating low-strength yarns (Y1a) and high-strength yarns (Y1b) in some area (AT), and first yarns (Y1) including high-strength yarns (Y1b) are woven with second yarns (Y2) in the remaining area, and a second fabric layer (L2) in which there are alternating low-strength yarns (Y3a) and high-strength yarns (Y3b) in some area (AT), and third yarns (Y3) including high-strength yarns (Y3b) are woven with fourth yarns (Y4) in the remaining area.

### <Description of symbols>

L1: first fabric layer, L2: second fabric layer
Y1: first yarn, Y2: second yarn, Y3: third yarn, Y4: fourth yarn
Y1a, Y3a: low-strength yarn
Y1b, Y3b: high-strength yarn
T: tether yarn, T1 : first tether yarn, T2: second tether yarn
AT: some area or area where tether yarn (T), which has intersected with first yarn (Y1), intersects third yarn (Y3)

### [DETAILED DESCRIPTION OF THE EMBODIMENTS]

Hereinafter, embodiments of the present application will be described in detail with reference to the attached drawings so that those skilled in the art can easily implement the present invention. However, the present invention may be implemented in many different forms and is not limited to the embodiments described herein.

According to one embodiment of the present disclosure, there is provided a two-layer fabric including a first fabric layer woven by intersecting first yarns extending in a first direction with second yarns extending in a second direction; a second fabric layer woven by intersecting third yarns extending in a first direction with fourth yarns extending in a second direction; and tether yarns woven with the first yarns and the third yarns to connect the first fabric layer and the second fabric layer,
wherein at least some of the first yarns and the third yarns comprise low-strength yarns and high-strength yarns alternately arranged in a second direction, and
in the area where the tether yarn, which has intersected with the first yarn, intersects the third yarn, the tether yarn is woven only over the low-strength yarn among the first yarns and the low-strength yarn among the third yarns.

According to the prior art, a two-layer fabric for an airbag with an inner tether was manufactured without distinguishing between warp and weft yarns. For example, in the prior art, single yarns such as ordinary filament yarns or twisted yarns were commonly used for the weft and warp yarns of two-layer fabrics. These single yarns usually had a fineness of 400 to 600 denier.

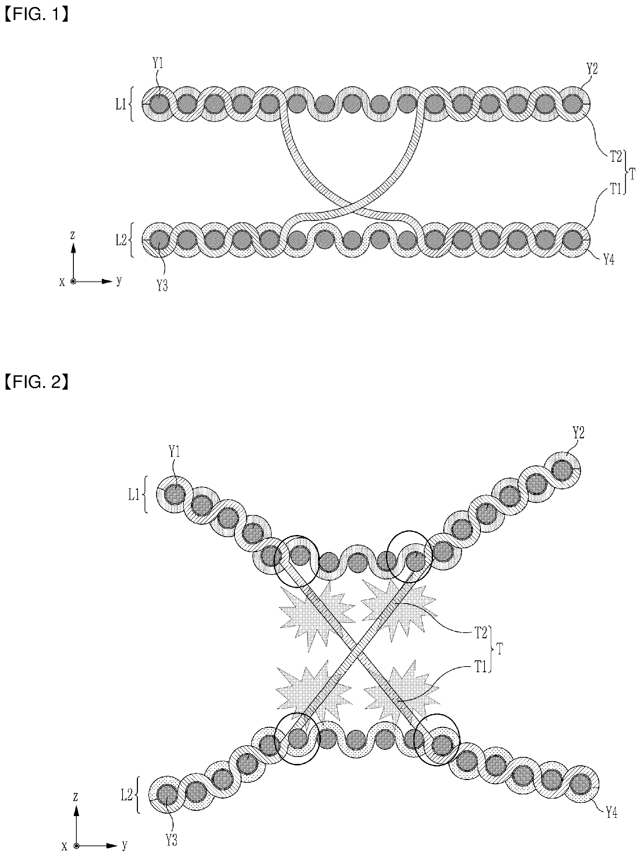

Referring to FIGs. 1 and 2, in the prior art, when the two-layer fabric was inflated, tether yarns (T) constituting the tether received a direct force (inflation force), causing a problem of breaking. In addition, when force was applied to the tether yarns (T), the tether yarns (T) or other yarns (Y1, Y2, Y3, Y4) were pushed out of their original positions, causing a problem of generating pin holes. These problems worsened the degree of internal pressure retention of the airbag.

This application was developed to solve these problems. Specifically, in the present disclosure, a pair of heterogeneous yarns with different strengths is used as the weft or warp yarn of a two-layer fabric, and the tether yarns are arranged over the yarn with relatively low strength. Due to this configuration, when the two-layer fabric inflates and an external force (tension or inflation force) acts on the tether yarn, only the low-strength yarn can be broken and the shock applied to the tether yarn can be absorbed. As a result, the above configuration can prevent the tether yarn from breaking and air leakage due to the pin hole. Further, even if the low-strength yarn is broken, the tether yarn is over the high-strength yarn located next to it, so the inflation rate and/or inflation volume of the two-layer fabric can be controlled while maintaining the length of the tether composed of the intended tether yarns through inner tether design.

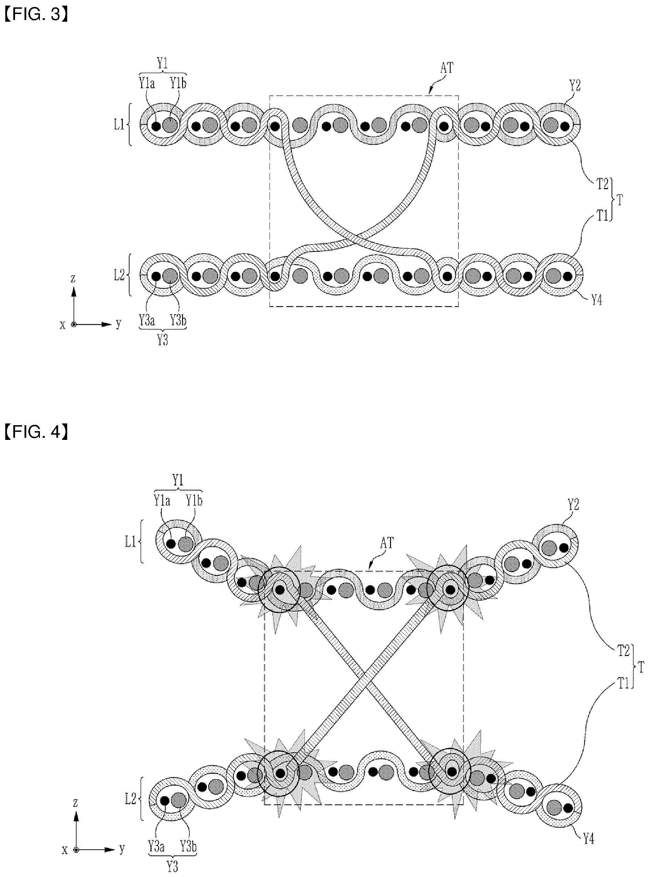

Referring to FIG. 3, the two-layer fabric includes a first fabric layer (L1) and a second fabric layer (L2). The first fabric layer (L1) and the second fabric layer (L2) may be arranged to face each other. The first fabric layer (L1) and the second fabric layer (L2) are connected to each other by the tether yarn (T).

The first fabric layer (L1) may be woven by intersecting first yarns (Y1) extending in a first direction (x-direction) with second yarns (Y2) extending in a second direction (y-direction). The second fabric layer (L2) may be woven by intersecting third yarns (Y3) extending in a first direction (x-direction) with fourth yarns (Y4) extending in a second direction (y-direction). At this time, the first yarns (Y1) and the third yarns (Y3) may be any one of the warp and weft yarns, and the second yarns (Y2) and the fourth yarns (Y4) may be the other of the warp and weft yarns.

The two-layer fabric has gas inflatability or expansibility. For example, the two-layer fabric of the present disclosure may have gas inflatability through bonding between the first and second fabric layers (L1, L2) facing each other. Additionally, the two-layer fabric may have airtightness to the extent that it can have the above-described gas inflatability or expansibility. For example, the first and second fabric layers (L1, L2) are joined to prevent gas from escaping between the first and second fabric layers (L1, L2), and a two-layer fabric may be constructed to withstand the pressure of the inflating gas. Accordingly, when gas enters, the two-layer fabric swells and protects the user from external shock.

The joining method between the first and second fabric layers (L1, L2) is not particularly limited. For example, the first and second fabric layers (L1, L2) may be manufactured by one piece woven method, and the separated first and second fabric layers (L1, L2) may be woven simultaneously. That is, the first and second fabric layers (L1, L2) may be joined through a joint point.

In the two-layer fabric for an airbag, a seam is sometimes formed in the inflation part to control the deployment shape of the two-layer fabric when inflated. However, according to one embodiment of the present disclosure, a two-layer fabric that can be inflated into a balloon shape without sewing can be provided using a Jacquard loom. Specifically, since a fabric pattern including an inner tether is formed in the two-layer fabric according to the above embodiment, it is possible to provide a non-woven airbag in which a seam is not formed to control the deployment shape of the two-layer fabric when inflated.

In the above two-layer fabric, the position at which the tether composed of tether yarns is applied is not particularly limited. For example, the tether can be applied to some area of the two-layer fabric that would experience the greatest force (stress) when the two-layer fabric actually inflates.

Referring to FIG. 3, the tether yarn (T) is woven by intersecting with the first yarns (Y1) and the third yarns (Y3) in the same way as the second yarns (Y2) and the fourth yarns (Y4). In the drawings of this application, the tether yarn (T) is shown separately from the second yarns (Y2) and the fourth yarns (Y4) for convenience of explanation. However, since the tether yarn (T) is also woven by intersecting with the first yarns (Y1) and the third yarns (Y3), it can be understood as either the second yarns (Y2) or the fourth yarns (Y4). For example, when the second yarns (Y2) and the fourth yarns (Y4) are warp yarns, the tether yarn (T) may also be a warp yarn, and when the second yarns (Y2) and the fourth yarns (Y4) are weft yarns, the tether yarn (T) may also be a weft yarn.

Referring to FIG. 3, in one example, the first yarns (Y1) may be composed of low-strength yarn (Y1a) and high-strength yarn (Y1b) alternately arranged in a second direction (y direction). The first yarns (Y1) may be composed of a pair of one low-strength yarn (Y1a) and one high-strength yarn (Y1b), and can intersect with the second yarns (Y2) to form a first fabric layer (L1).

In one example, the third yarns (Y3) may be composed of low-strength yarn (Y3a) and high-strength yarn (Y3b) alternately arranged in a second direction (y direction). The third yarns (Y3) may be composed of a pair of one low-strength yarn (Y3a) and one high-strength yarn (Y3b), and can intersect with the fourth yarns (Y4) to form a second fabric layer (L2).

The low-strength yarns (Y1a, Y3a) and high-strength yarns (Y1b, Y3b) constituting the first yarns (Y1) or third yarns (Y3) are alternately arranged adjacent to each other, and there may be no other fibers between the low-strength yarns (Y1a, Y3a) and the high-strength yarns (Y1b, Y3b).

In this disclosure, among the two types of fibers with different strengths, the yarn with relatively high strength is called "high-strength yarn", and the yarn with relatively low strength is called "low-strength yarn". In one example, low-strength yarns (Y1a, Y3a) are meant to have lower fineness or lower tenacity (N) than that of high-strength yarns (Y1b, Y3b).

In one example, when each of the first yarns (Y1) and the third yarns (Y3) are composed of low-strength yarns (Y1a, Y3a) and high-strength yarns (Y1b, Y3b) alternately arranged in a second direction (y direction), and the number of high-strength yarns (Y1b, Y3b) is n, the number of low-strength yarns (Y1a, Y3a) may be n+1 or greater.

Referring to FIG. 3, in one example, the first yarns (Y1) may be woven by forming a pair of one low-strength yarn (Y1a) and one high-strength yarn (Y1b), followed by intersecting with the tether yarn (T).

In one example, the third yarns (Y3) may be woven by forming a pair of one low-strength yarn (Y3a) and one high-strength yarn (Y3b), followed by intersecting with the tether yarn (T).

Referring to FIG. 3, in one example, in the area (AT) where the tether yarn (T), which has intersected with the first yarn (Y1), intersects the third yarn (Y3), the tether yarn (T) may be woven only over the low-strength yarn (Y1a) among the first yarns (Y1) and the low-strength yarn (Y3a) among the third yarns (Y3).

Referring to FIG. 4, when the tether yarn (T) woven as above is included, the low-strength yarns (Y1a, Y3a) over the tether yarn (T) may rupture (break) due to the force applied to the tether yarn (T) when the two-layer fabric is inflated (inflation force by gas or tension applied to tether yarn (T) by gas-induced inflation).

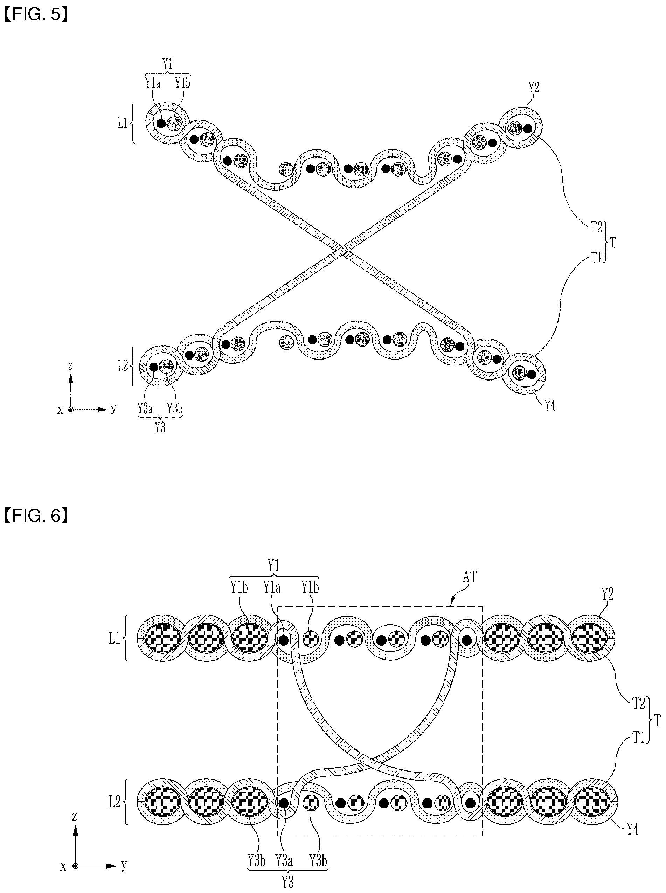

Referring to FIG. 5, the two-layer fabric according to one embodiment can maintain the desired shape of the tether by absorbing the stress applied to the tether when the two-layer fabric is deployed through the rupture of low-strength yarns (Y1a and Y3a). Accordingly, using the two-layer fabric according to the above embodiment makes it easy to control the deployment shape of the airbag, and has the advantage of effectively preventing brain injury to the user due to excessive inflation of the airbag.

Referring to FIG. 6, in one example, the first yarns (Y1) include low-strength yarn (Y1a) and high-strength yarn (Y1b) alternately arranged in a second direction (y direction) in some area (AT), and may include high-strength yarn (Y1b) in the remaining area. In some area (AT), the first yarns (Y1) may intersect with the second yarns (Y2) after forming a pair of one low-strength yarn (Y1a) and one high-strength yarn (Y1b). In the remaining area, the high-strength yarn (Y1b) may intersect with the second yarns (Y2) to form a first fabric layer (L1).

In one example, the third yarns (Y3) include low-strength yarn (Y3a) and high-strength yarn (Y3b) alternately arranged in a second direction (y direction) in some area (AT), and may include high-strength yarn (Y3b) in the remaining area. In some area (AT), the third yarns (Y3) may intersect with the fourth yarns (Y4) after forming a pair of one low-strength yarn (Y3a) and one high-strength yarn (Y3b). In the remaining area, the high-strength yarn (Y3b) may intersect with the fourth yarns (Y4) to form a second fabric layer (L2).

The arrangement of the low-strength yarns (Y1a, Y3a) and the high-strength yarns (Y1b, Y3b) in some area (AT) may be the same as described with reference to FIG. 3.

Referring to FIG. 6, in one example, the high-strength yarn (Y1b), which is the first yarn (Y1) in the remaining area excluding some area (AT), may be woven by intersecting with the tether yarn (T).

In one example, the high-strength yarn (Y3b), which is the third yarn (Y3) in the remaining area excluding some area (AT), may be woven by intersecting with the tether yarn (T).

Referring to FIG. 6, in one example, in the area (AT) where the tether yarn (T) which has intersected with the first yarn (Y1), intersects with the third yarn (Y3), the tether yarn (T) may be woven only over the low-strength yarn (Y1a) among the first yarns (Y1) and the low-strength yarn (Y3a) among the third yarns (Y3). When weaving the tether yarn (T) in this way, the same effects described above can be achieved. As shown in FIG. 6, when low-strength yarns (Y1a, Y3a) are placed only in some area (AT), a two-layer fabric with higher strength can be provided.

The two-layer fabric may include two or more tether yarns (T). In FIGs. 3 and 6, a cross-section of the two-layer fabric to which two tether yarns (T) are applied is shown for convenience, but the number of tether yarns (T) is not limited thereto.

Referring to FIG. 3 or FIG. 6, the two or more tether yarns (T1, T2) may intersect each other between the first and second fabric layers (L1, L2) to form an X shape when viewed from a cross section of the two-layer fabric.

Specifically, the first yarns (Y1) and the third yarns (Y3) may be arranged from one end (e.g., left side of FIG. 3 or 6) to the other end (e.g., right side of FIG. 3 or 6) of the second direction (y direction). The first fabric layer (L1) and the second fabric layer (L2) are formed by intersecting the first yarns (Y1) and the third yarns (Y3) with the second yarns (Y2) and the fourth yarns (Y4), respectively.

Referring to FIG. 3 or FIG. 6, the first tether yarn (T1), which is one of the plurality of tether yarns (T), may be woven with the first yarns (Y1) from one end to the other end of the second direction (y direction) to form a part of the first fabric layer (L1). This first tether yarn (T1) may be woven with the third yarns (Y3) only over the low-strength yarn (Y1a) among the first yarns (Y1). At this time, the first tether yarn (T1) may be woven with the third yarns (Y3) from one end to the other end of the second direction (y direction) to form a part of the second fabric layer (L2). The first tether yarn (T1) passes through the space between the first fabric layer (L1) and the second fabric layer (L2) only over the low-strength yarn (Y1a) among the first yarns (Y1), and may be woven only over the low-strength yarn (Y3a) among the third yarns (Y3) of the second fabric layer (L2). Accordingly, as described above, the force (stress) applied to the first tether yarn (T1) is distributed to the low-strength yarns (Y1a, Y3a) of the first and second fabric layers (L1, L2), thereby preventing rupture of the tether.

Meanwhile, referring to FIG. 3 or FIG. 6, the second tether yarn (T2), which is one of the plurality of tether yarns (T), may be woven with the third yarns (Y3) from one end to the other end of the second direction (y direction) to form a part of the second fabric layer (L2). This second tether yarn (T2) may be woven with the first yarns (Y1) only over the low-strength yarn (Y3a) among the third yarns (Y3). At this time, the second tether yarn (T2) may be woven with the first yarns (Y1) from one end to the other end of the second direction (y direction) to form a part of the first fabric layer (L1). The second tether yarn (T2), like the first tether yarn (T1), passes through the space between the first fabric layer (L1) and the second fabric layer (L2) only over the low-strength yarn (Y3a) among the third yarns (Y3), and may be woven only over the low-strength yarn (Y1a) among the first yarns (Y1) of the first fabric layer (L1). Accordingly, as shown in FIGs. 3 and 6, the first and second tether yarns (T1, T2) may intersect each other between the first and second fabric layers (L1, L2) to form an X shape when viewed from a cross section of the two-layer fabric. A plurality of tether yarns may be intersected each other to form a tether that more tightly connects the first and second fabric layers (L1, L2).

The type of yarn used to weave the two-layer fabric is not particularly limited. For example, the first to fourth yarns (Y1, Y2, Y3, Y4) and the tether yarn (T) may each independently include one or more fibers selected from polyester fibers (e.g., PET), polyamide fibers (e.g., nylon), polyaramid fibers, polyketone fibers, carbon fibers, and cellulose fibers.

In one example, the low-strength yarns (Y1a, Y3a) may be fibers with a fineness of 10 to 400 denier. Specifically, the low-strength yarns (Y1a, Y3a) may be fibers with a fineness of 50 denier or more, 150 denier or more, 200 denier or more, 250 denier or more, 300 denier or more, or 350 denier or more, and 350 denier or less, 300 denier or less, 250 denier or less, 200 denier or less, 150 denier or less, 100 denier or less, or 50 denier or less.

In one example, the high-strength yarns (Y1b, Y3b) may refer to fibers with a relatively higher fineness than the fineness of the low-strength yarns (Y1a, Y3a). Specifically, the difference in fineness between high-strength yarns (Y1b, Y3b) and low-strength yarns (Y1a, Y3a) may be, for example, 50 denier or more, 100 denier or more, 150 denier or more, 200 denier or more, 250 denier or more, 300 denier or more, 350 denier or more, 400 denier or more, 450 denier or more, 500 denier or more, 550 denier or more or 600 denier or more. The upper limit of the difference in fineness between high-strength yarns (Y1b, Y3b) and low-strength yarns (Y1a, Y3a) may be, for example, 900 denier or less, 800 denier or less, 700 denier or less, 600 denier or less, 500 denier or less, 400 denier or less, 300 denier or less, 200 denier or less, or 100 denier or less.

In one example, the low-strength yarns (Y1a, Y3a) may refer to fibers having a relatively lower tenacity than that of the high-strength yarns (Y1b, Y3b). Specifically, low-strength yarns (Y1a, Y3a) may have a tenacity of 50% or less of the tenacity of high-strength yarns (Y1b, Y3b). For example, when the high-strength yarns (Y1b, Y3b) have a tenacity of 30 to 50 N, the low-strength yarns (Y1a, Y3a) may have a tenacity of about 50% or less of the tenacity of high-strength yarns (Y1b, Y3b). For example, the low-strength yarns (Y1a, Y3a) may have a tenacity of about 25 N or less, 20 N or less, or 15 N or less.

In one example, the high-strength yarns (Y1b, Y3b), the second yarns (Y2), and the fourth yarns (Y4) may be the same fibers or include the same fibers. For example, the high-strength yarns (Y1b, Y3b), the second yarns (Y2), and the fourth yarns (Y4) may have the same strength. In another example, the high-strength yarns (Y1b, Y3b), the second yarns (Y2), the fourth yarns (Y4), and the tether yarn (T) may be the same fibers or include the same fibers. For example, the high-strength yarns (Y1b, Y3b), the second yarns (Y2), the fourth yarns (Y4), and the tether yarn (T) may have the same strength. That is, the two-layer fabric according to one embodiment may be woven using high-strength yarns and low-strength yarns as first to fourth yarns and tether yarns.

## Claims

1. A two-layer fabric comprising
a first fabric layer woven by intersecting first yarns extending in a first direction with second yarns extending in a second direction;
a second fabric layer woven by intersecting third yarns extending in the first direction with fourth yarns extending in the second direction; and
a tether yarn woven with the first yarns and the third yarns to connect the first fabric layer and the second fabric layer,
wherein at least some of the first yarns and the third yarns comprise low-strength yarns and high-strength yarns alternately arranged in the second direction, and
in the area where the tether yarn, which has intersected with the first yarn, intersects the third yarn, the tether yarn is woven only over the low-strength yarn among the first yarns and the low-strength yarn among the third yarns.

2. The two-layer fabric of Claim 1,
wherein the low-strength yarn ruptures by the force applied to the tether yarn when the two-layer fabric inflates.

3. The two-layer fabric of Claim 1,
wherein there are two or more the tether yarns.

4. The two-layer fabric of Claim 3,
wherein the two or more tether yarns intersect each other between the first and second fabric layers to form an X shape when viewed from a cross section of the two-layer fabric.

5. The two-layer fabric of Claim 1,
wherein the first yarns are composed of the low-strength yarns and the high-strength yarns alternately arranged in the second direction, and intersect with the second yarns after forming a pair of the one low-strength yarn and the one high-strength yarn, or
the third yarns are composed of the low-strength yarns and the high-strength yarns alternately arranged in the second direction, and intersect with the fourth yarns after forming a pair of the one low-strength yarn and the one high-strength yarn.

6. The two-layer fabric of Claim 1,
wherein the first yarns are composed of the low-strength yarns and the high-strength yarns alternately arranged in the second direction, and some of the first yarns intersect with the tether yarn after forming a pair of the one low-strength yarn and the one high-strength yarn, or
the third yarns are composed of the low-strength yarns and the high-strength yarns alternately arranged in the second direction, and some of the third yarns intersect with the tether yarn after forming a pair of the one low-strength yarn and the one high-strength yarn.

7. The two-layer fabric of Claim 1,
wherein the first yarns and the third yarns are composed of the low-strength yarns and the high-strength yarns alternately arranged in the second direction, and the first yarns and the third yarns intersect with the second yarns and the fourth yarns, respectively, after forming a pair of the one low-strength yarn and the one high-strength yarn;
some of the first yarns intersect with the tether yarn after forming a pair of the one low-strength yarn and the one high-strength yarn, and some of the third yarns intersect with the tether yarn after forming a pair of the one low-strength yarn and the one high-strength yarn; and
in the area where the tether yarn, which has intersected with the first yarn, intersects the third yarn, the tether yarn is woven only over the low-strength yarn among the first yarns and the low-strength yarn among the third yarns.

8. The two-layer fabric of Claim 1,
wherein when the number of the high-strength yarns is n, the number of the low-strength yarns is n+1.

9. The two-layer fabric of Claim 1,
wherein the first yarns comprise the low-strength yarns and the high-strength yarns alternately arranged in the second direction in some area, and high-strength yarns in the remaining area, where the first yarns intersect with the second yarns after forming a pair of one low-strength yarn and one high-strength yarn in some area, and the high-strength yarns intersect with the second yarns in the remaining area; or
the third yarns comprise the low-strength yarns and the high-strength yarns alternately arranged in the second direction in some area, and high-strength yarns in the remaining area, where the third yarns intersect with the fourth yarns after forming a pair of one low-strength yarn and one high-strength yarn in some area, and the high-strength yarns intersect with the fourth yarns in the remaining area.

10. The two-layer fabric of Claim 1,
wherein the first yarns comprise the low-strength yarns and the high-strength yarns alternately arranged in the second direction in some area, and high-strength yarns in the remaining area, where the first yarns, which are high-strength yarns, intersect with the tether yarn in the remaining area; or
the third yarns comprise the low-strength yarns and the high-strength yarns alternately arranged in the second direction in some area, and high-strength yarns in the remaining area, where the third yarns, which are high-strength yarns, intersect with the tether yarn in the remaining area.

11. The two-layer fabric of Claim 1,
wherein the first yarns and the third yarns comprise the low-strength yarns and the high-strength yarns alternately arranged in the second direction in some area, and high-strength yarns in the remaining area, where the first yarns and the third yarns intersect with the second yarns and the fourth yarns, respectively, after forming a pair of one low-strength yarn and one high-strength yarn in some area, and the first yarns and the third yarns, which are the high-strength yarns, intersect with the second yarns and the fourth yarns, respectively, in the remaining area;
the first yarns, which are the high-strength yarns, intersect with the tether yarn, and the third yarns, which are the high-strength yarns, intersect with the tether yarn in the remaining area; and
in the area where the tether yarn, which has intersected with the first yarn, intersects the third yarn, the tether yarn is woven only over the low-strength yarn among the first yarns and the low-strength yarn among the third yarns.

12. The two-layer fabric of Claim 1,
wherein the first to fourth yarns and the tether yarn each independently comprise one or more fibers selected from polyester fibers, polyamide fibers, polyaramid fibers, polyketone fibers, carbon fibers, and cellulose fibers.

13. The two-layer fabric of Claim 1,
wherein the low-strength yarns have a smaller fineness or lower tenacity than that of the high-strength yarns.

14. The two-layer fabric of Claim 1,
wherein the high-strength yarns, the second yarns and the fourth yarns comprise the same fibers.
